Europäisches Patentamt

European Patent Office

Office européen des brevets

(19)

(11) Publication number: **0 041 761**
**A1**

## (12) EUROPEAN PATENT APPLICATION

(21) Application number: **81200618.7**

(22) Date of filing: **04.06.81**

(51) Int. Cl.³: **C 01 B 17/50**
**B 04 B 11/02**

(30) Priority: **06.06.80 NL 8003307**

(43) Date of publication of application:
**16.12.81 Bulletin 81/50**

(84) Designated Contracting States:
**AT BE DE FR GB IT NL SE**

(71) Applicant: **STAMICARBON B.V.**
**Postbus 10**
**NL-6160 MC Geleen(NL)**

(72) Inventor: **Weterings, Cornelis Antonius M.**
**Schineksstraat 60**
**NL-6171 AP Stein (L.)(NL)**

(74) Representative: **Roeffen, Wilhelmus Johannes**
**Maria et al,**
**OCTROOIBUREAU DSM Postbus 9**
**NL-6160 MA Geleen(NL)**

(54) Process for recovering calcium compounds and sulphur dioxide from calcium sulphate, and calcium compounds and sulphur dioxide obtained according to this process.

(57) Calcium sulphate is decomposed at elevated temperature and in the presence of a carbon source into a calcium compound and sulphur dioxide.

As starting material calciumsulphate anhydrite is used, which is obtained by recrystallizing crude phosphogypsum with $H_2SO_4$ at a concentration of 20-65 wt.-% $H_2SO_4$, at 20-90 °C for 5-180 minutes.

Pure products can be obtained from crude gypsum in a very simple manner.

EP 0 041 761 A1

Croydon Printing Company Ltd.

1

PROCESS FOR RECOVERING CALCIUM COMPOUNDS AND SULPHUR DIOXIDE FROM
CALCIUM SULPHATE, AND CALCIUM COMPOUNDS AND SULPHUR DIOXIDE OBTAINED
ACCORDING TO THIS PROCESS

The invention relates to a process for recovering calcium compounds and sulphur dioxide from calcium sulphate, in which process calcium sulphate, together with a carbon source and, possibly, other additives, is decomposed at a high temperature to a solid calcium compound and to gases containing sulphur dioxide, the gases containing sulphur dioxide are separated from the calcium compound and the sulphur dioxide is recovered from the gases.

Such processes are known from, for instance, Ind. Eng. Chem., Process Des. Dev., 14 (1975) no. 3, pages 323-327, and Chemical and Process Engin. August 1971, page 55. In the process described in Ind. Eng. Chem. 14(1975) no. 3, pages 323-327, natural calcium sulphate is decomposed with natural gas and a quantity of air at a temperature of about 1000-1200 °C to solid calcium oxide and gases containing sulphur dioxide, which are separated from the calcium oxide and which are suitable, after cooling and dust removal, for processing to sulphuric acid.

In the process described in Chem. and Proc. Eng., Aug. 1971, page 55, calcium sulphate anhydrite- or hemihydrate, together with coke, sand and clay, is converted, at a temperature of about 1400 °C, to cement clinker and a gas containing sulphur dioxide, which gas is separated from the cement clinker and processed to sulphuric acid. After addition of gypsum, the cement clinker is ground to cement.

A disadvantage of these known processes is that, as starting material, natural calcium sulphate, preferably natural anhydrite, must be used. It has been found that the use of calcium sulphate, obtained as byproduct in the preparation of phosphoric acid by decomposition of phosphate rock with sulphuric acid (the so-called phosphogypsum), meets with objections.

Thus such a calcium sulphate contains a rather large quantity of entrained water (about 55 % by weight calculated in respect of $CaSO_4$) and in case of calcium sulphate dihydrate, moreover, a large quantity (about 21 % by weight) of hydrate water. Prior to a decomposition process to calcium compounds and sulphur dioxide, this water must be substantially removed, for instance by evaporation, which involves substantial costs.

Another, even greater disadvantage is that phosphogypsum has a rather high content of phosphate, fluorine and other impurities, particularly (heavy) metals, which have a disturbing effect in the decomposition of the phosphogypsum and contaminate particularly the decomposition products formed in this process.

In a process in which phosphogypsum is processed to recover sulphur dioxide and cement it is particularly the phosphate and the fluorine that have a disturbing effect. The fact is that phosphate has an adverse effect on the hardening time of concrete mortar obtained from this cement and on the initial hardening process. Moreover, owing to a high phosphate and/or fluorine content, problems will arise in the production of cement clinker in consequence of lowering of the melting point of the mixture. The presence of fluorine has an adverse effect on the activity of the catalyst used in the oxidation of the sulphur dioxide. The disadvantage of the presence of heavy metals (for instance Cd and Hg) in the gypsum is that these metals will evaporate in the heating process and will escape along with the off gas. The separation of these metals, which are very noxious to the environment, from the off gas is very difficult.

In a process in which phosphogypsum is processed to recover sulphur dioxide and calcium oxide it is, beside the fluorine, which deactivates the sulphur dioxide oxidation catalyst, for the said reason, heavy metals that have a disturbing effect, because in the heating process they will escape partly in the form of vapour along with the off gas. Moreover, they are harmful to the quality of the calcium oxide formed. For instance, a calcium oxide of too high a heavy metal content is not applicable, per se, in the sugar industry or in water purification.

The removal of these impurities from phosphogypsum, for instance to a $P_2O_5$ content < 0.5 % by weight and a fluorine content < 0.15 % by weight, requires a very laborious treatment such as, for instance, addition of $SiO_2$, acidification with sulphuric acid and calcination, in which treatment the fluorine escapes, and subsequently washing out the product, filtration and re-calcination for the removal of $P_2O_5$.

For the removal of the heavy metals present separate treatment steps will yet be required.

Now, the invention provides a process in which it is possible to recover technically pure sulphur dioxide and calcium compounds in a simple manner from crude phosphogypsum, in which process the said disadvantages do not or hardly occur.

This is achieved, according to the invention, in that, in the decomposition, as calcium sulphate a calcium sulphate anhydrite is used, which has been obtained by recrystallizing crude calcium sulphate dihydrate, originating from a phosphoric acid process, by means of sulphuric acid at an $H_2SO_4$ concentration of 20-65 % by weight calculated in respect of the quantity of liquid phase of the recrystallization mixture at a temperature of between 20 and 90 °C and a residence time of 5 minutes to 3 hours and by separating the calcium sulphate anhydrite formed from the acid recrystallization liquid.

It has been found that the calcium sulphate anhydrite obtained in this process contains substantially less water than the crude phosphogypsum, because not only the hydrate water (21 % by weight) but also the entrained water will merge into the recrystallization liquid and because, after washing, anhydrite will contain substantially less entrained water than the corresponding quantity of dihydrate. Moreover, the content of phosphate, fluorine and metals in the anhydrite obtained is substantially lower than in the phosphogypsum. In anhydrite obtained as intermediate product with the process according to the invention the $P_2O_5$ and the F content is < 0.01 % by weight respectively 0.05 % by weight, compared with approx. 1 % by weight and approx. 1 % by weight respectively in phosphogypsum.

Such an anhydrite is applicable, per se, for decomposition to technically pure sulphur dioxide and calcium compounds.

According to the invention the recrystallization of the phosphogypsum is carried out by means of sulphuric acid at an $H_2SO_4$ concentration of 20-65 % by weight, calculated in respect of the quantity of liquid phase of the recrystallization mixture. This $H_2SO_4$ concentration depends on the concentration of the sulphuric acid supplied and the weight ratio between acid supplied and calcium sulphate dihydrate to be converted. Preferably highly concentrated technical sulphuric acid, for instance 96–98 % $H_2SO_4$, is fed to the recrystallization zone, and the $H_2SO_4$ concentration in the mixture is set at the desired value by variation of the weight ratio between sulphuric acid supplied and calcium sulphate dihydrate to be recrystallized.

According to the invention the recrystallization takes place at a temperature of between 20 and 90 °C and a residence time of 5 minutes to 3 hours. It has been found that the average particle size of the calcium sulphate anhydrite formed can be varied by varying the temperature and the residence time in the recrystallization zone, in which process the average particle size of the anhydrite increases when lowering the temperature and extending the residence time and vice versa. Thus, for instance, a product of an average particle size of 0.5–3 $\mu$m is obtained at a temperature of 40–90 °C and a residence time of 5–30 minutes, whereas at a temperature of 20–45 °C and a residence time of 0.5–3 hours a product of an average particle size of between 10 and 20 $\mu$m is obtained.

Moreover, the average particle size of the product can even be further inceased, respectively reduced, by lowering, respectively increasing, the $H_2SO_4$ concentration in the recrystallization mixture.

Although according to the invention both the fine and the coarse anhydrite can be converted to technically pure sulphur dioxide and calcium compounds, relatively coarse-crystalline anhydrite is preferably started from, because it can be washed out better and gives fewer dusting problems in the heating process, particularly in a fluid bed. The recrystallization of the phosphogypsum is, therefore, preferably carried out at a temperature of between 20 and 45 °C, with a residence time longer than 0.5 hour, specifically longer than 2 hours, at an $H_2SO_4$ concentration of 40–50 % by weight.

It has further been found that the average particle size of the anhydrite can even be increased by recycling, in the recrystallization zone, a quantity of crystal slurry. Preferably a part of the slurry formed in the recrystallization process is therefore continuously recirculated over the recrystallization zone.

The average diameter of the calcium sulphate anhydrite formed can be increased by carrying out the recrystallization in the presence of multivalent metal ions, more specifically of di-, tri- and/or pentavalent metal compounds as described in the non-prepublished Dutch patent application 7812109.

The calcium sulphate anhydrite formed in the recrystallization process can be separated from the recrystallization liquid in various ways, for instance by centrifugation or filtration. The product formed consists practically quantitatively of calcium sulphate anhydrite and is of a block-shaped structure.

The sulphuric acid remaining after separating out the calcium sulphate anhydrite, which sulphuric acid is diluted owing to the absorption of the hydrate water and a part of the entrained water of the phosphogypsum, can be used for various purposes, for instance for the preparation of ammonium sulphate and ammonium sulphate nitrate. The diluted acid liquid is preferably used for the decomposition of phosphate rock. It has the extra advantage that fresh technical sulphuric acid (96-98 %) can then be used for the recrystallization, in which process it is diluted by the absorption of water from the phosphogypsum to approximately the concentration required for the decomposition of phosphate, so that a separate dilution step of the technical sulphuric acid is superfluous. If the acid remaining after recrystallization does not have the concentration required for the phosphate decomposition, a quantity of technical sulphuric acid can be supplied to the digestion zone, if desired.

Apart from a quantity of entrained water, the calcium sulphate anhydrite separated from the recrystallization liquid contains a small quantity of entrained sulphuric acid. Preferably, before being passed to the decomposition zone, the anhydrite is first washed with water and, if so desired, dried. The washing water obtained in this process, containing sulphuric acid, is then circulated in the phosphate decomposition process as washing water for the various filters and/or to the decomposition zone.

The calcium sulphate anhydrite resulting after washing and, possibly, drying, which is practically free from phosphate, fluorine and metal impurities, is converted, by a method known per se, to a solid calcium compound and a gas mixture containing sulphur dioxide, which mixture is separated from the calcium compound.

If, in addition to sulphur dioxide, calcium oxide is required as product, the calcium sulphate anhydrite is roasted in the presence of natural gas or of another hydrocarbon and of a limited quantity of air at a temperature of between about 1000 and 1250 °C, for instance in one or more fluid beds. In this process the natural gas is decomposed into hydrogen and carbon monoxide, which react in situ with the anhydrite with formation of solid calcium oxide and a gas mixture consisting of sulphur dioxide, carbon dioxide and water vapour, while the intermediate calcium sulphide formed is converted by the oxygen present into calcium oxide and calcium sulphate. The gas mixture escaping from the reaction zone is purified of solids, for instance by means of a cyclone and/or filter, and subsequently liberated by condensation of water vapour. The remaining gas, containing sulphur dioxide, can subsequently be converted with oxygen over a catalyst ($V_2O_5$), as known in the art, into sulphur trioxide, which is converted, after absorption in concentrated sulphuric acid, into sulphuric acid by reaction with water. The resulting concentrated sulphuric acid (of 96-98 % strenght) can be used with advantage for the recrystallization of phosphogypsum and/or for the decomposition of phosphate rock. The solid product formed in the decomposition zone, which practically quantitatively consists of calcium oxide, is of such a purity that it is suitable, without further processing, for use in the sandlime brick and lime mortar industry and can even be used as precipitant in the sugar industry or for the purification of water. The product is also very suitable for use in the desulphurizing of flue gases.

If, in addition to sulphur dioxide, cement clinker is required as product, the anhydrite is heated together with coke, clay and sand, for instance in a rotary kiln with combustion gases flowing countercurrent to a temperature of about 1200-1500 °C. The gases escaping from the heating zone, which contain 8-10 % by weight of sulphur dioxide, can be processed, after cooling and drying, to sulphuric acid as known in the art. The solid cement clinker is quickly cooled with combustion air and, after addition of a small quantity of gypsum, ground to cement. The cement obtained in this process, which is practically free from phosphate and fluorine, is of the same or of even a better quality than cement obtained on the basis of calcium carbonate.

The invention is further elucidated in the following examples.

Example 1

Into a glass reaction vessel provided with a stirrer calcium sulphate dihydrate, obtained as byproduct of a wet-process phosphoric acid manufacture and containing 0.9 % by weight of $P_2O_5$, 0.6 % by weight of F, 12 ppm Cd, 10 ppm Pb and 5 ppm Hg, was passed. The water content of the dihydrate, not including the hydrate water (21 % by weight), was 55 % by weight in respect of $CaSO_4$. Subsequently 96 % (wt) sulphuric acid was passed in, in such a quantity that the $H_2SO_4$ concentration in the liquid phase of the recrystallization mixture was 45 % by weight. The temperature in the reaction vessel was kept at 25 °C. The mixture in the vessel was stirred for 2.5 hours.

Subsequently the resulting slurry was filtered. The filter cake was washed out with cold water and successively dried at 100 °C.

A product was obtained in which the calcium sulphate was present exclusively in the form of anhydrite and which contained < 0.01 % by weight of $P_2O_5$, 0.03 % by weight of F, < 1 ppm Cd, < 1 ppm Pb and < 1 ppm Hg. The water content of the anhydrite was 34 % by weight in respect of $CaSO_4$.

Experiment no. 1

The anhydrite obtained in example 1 was passed, together with natural gas and air, into a fluidized bed of alumina particles. The temperature of the mixture in the fluid bed was 1200 °C.

From the top of the decomposition zone a gas flow escaped which contained about 9 % $SO_2$ and which was free from fluorine and heavy metals. Via an overflow a solid product was obtained which consisted for about 99 % of calcium oxide and which contained 0.01 % by weight of $P_2O_5$ and 0.07 % by weight of F.

Experiment no. 2 (comparative experiment)

In the same way as in experiment 1, calcium sulphate dihydrate, used in example 1 as starting material was converted by means of natural gas and air at a temperature of about 1200 °C.

The gas flow escaping from the decomposition zone contained, in addition to 9 % $SO_2$, 0,06 % F, 3 ppm Cd and 1 ppm Hg. The solid calcium oxide product contained 3 % by weight of $P_2O_5$, 1.3 % by weight of F, 1 ppm Cd, 0.2 ppm Hg and 20 ppm Pb.

Example 2

Experiment no. 3

Calcium sulphate anhydrite obtained in applying the process of example 1 was passed into a rotating drum, together with coke, sand and clay, and there heated by combustion gases, flowing countercurrent, to about 800 °C. Subsequently the mixture was heated to about 1400 °C.

The escaping gas flow was filtered and dried and contained about 9.5 % by weight of $SO_2$ and was free from fluorine and heavy metals. The cement clinker obtained in the heating process was cooled with air and contained about 0.02 % by weight of $P_2O_5$ and 0.05 % by weight of F. To this product 5 % by weight of gypsum was added, after which the mixture was ground.

With the cement obtained in this process a concrete mortar was composed consisting of 13 % by weight of cement, 79 % by weight of sand plus gravel and 8 % by weight of water. The green and ultimate compressive strength obtained with this composition is shown in the following table.

| measured after | compressive strength in $N/mm^2$ |
|---|---|
| 1 day | 14.1 |
| 3 days | 25.2 |
| 7 days | 37.0 |
| 28 days | 49.0 |

Experiment no. 4 (comparative experiment)

In the same way as in experiment 3 a quantity of calcium sulphate dihydrate of the same composition as in example 1 was converted together with clay, sand and coke.

The gas flow escaping from the heating zone contained, in addition to 9.5 % $SO_2$, also 0.05 % F, 4 ppm Cd and 1 ppm Hg. The cement clinker obtained contained 1.7 % by weight of $P_2O_5$ and 0.7 % by weight of F.

After grinding of the clinker with 5 % by weight of gypsum, a concrete mortar was composed from the cement obtained consisting of 13 % by weight of cement, 79 % by weight of sand plus gravel and 8 % by weight of water. The green and ultimate strength obtained with this composition is shown in the following table.

| measured after | compressive strength in $N/mm^2$ |
|---|---|
| 1 day | 4.5 |
| 3 days | 10.0 |
| 7 days | 12.5 |
| 28 days | 25.3 |

CLAIMS

1. Process for recovering calcium compounds and sulphur dioxide from calcium sulphate, in which process calcium sulphate, together with a carbon source and, possibly, other additives, is decomposed at a high temperature to a solid calcium compound and to gases containing sulphur dioxide, the gases containing sulphur dioxide are separated from the calcium compound and the sulphur dioxide is recovered from the gases, characterized in that, as calcium sulphate, a calcium sulphate anhydrite is used, which has been obtained by recrystallizing crude calcium sulphate dihydrate, originating from a phosphoric acid process, by means of sulphuric acid at an $H_2SO_4$ concentration of 20-65 % by weight calculated in respect of the quantity of liquid phase of the recrystallization mixture at a temperature of between 20 and 90 °C and a residence time of 5 minutes to 3 hours and by separating the calcium sulphate anhydrite formed from the acid recrystallization liquid.

2. Process according to claim 1, characterized in that the recrystallization is carried out by means of sulphuric acid at an $H_2SO_4$ concentration of 40-50 % by weight, calculated in respect of the quantity of liquid phase of the recrystallization mixture, at a temperature ranging from 20-45 °C and a residence time ranging from 2 to 3 hours.

3. Process according to claim 1 or 2, characterized in that a part of the slurry formed in the recrystallization process is continuously recirculated over the recrystallization zone.

4. Process according to any one of the claims 1-3, characterized in that the diluted sulphuric acid obtained in the recrystallization process is used for the decomposition of phosphate rock.

5. Process according to any one of the claims 1-4, characterized in that the sulphur dioxide obtained in the decomposition of calcium sulphate is converted into sulphuric acid, which is used, wholly or partly, for the recrystallization of calcium sulphate dihydrate and/or the decomposition of phosphate rock.

6. Process according to claim 1, substantially as described.

7. Calcium compounds obtained by application of the process according to any one of the claims 1-6.

8. Sulphur dioxide obtained by application of the process according to any one of the claims 1-6.

**European Patent Office**

**EUROPEAN SEARCH REPORT**

**0041761**

Application number

EP 81 20 0618

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | |
| | DE - A - 2 728 148 (VISCH CHIMIKO-TECHNOLOGITSCHESKI INSTITUT) <br> * Page 1, claims 1,2; page 6, lines 4-9 * <br> -- | 1 | C 01 B 17/50 <br> C 04 B 11/02 |
| | US - A - 2 956 859 (WARREN RODGERS) <br> * Column 5, claim 1; column 3, lines 40-42 * <br> -- | 1 | |
| | US - A - 3 607 045 (THOMAS D. WHEELOCK) <br> * Column 7, claim 1; figure 2 * <br> -- | 1 | TECHNICAL FIELDS SEARCHED (Int. Cl.³) <br><br> C 01 F 11/00 <br> 11/08 <br> 11/46 <br> C 04 B 11/02 <br> 1/04 <br> C 01 B 17/50 |
| | US - A - 3 607 036 (RALPH M. FOECKING) <br> * Column 2, lines 55-62; column 1, lines 5-8 * <br> -- | 1 | |
| A | DE - C - 903 089 (I.C.I.) | | |
| A | CHEMICAL ABSTRACTS, vol. 83, no. 6, 11th August 1975, page 114, no. 45351v <br> Columbus, Ohio, U.S.A. <br><br> & SU - A - 262 867 (BERNATSKII, YU.P. et al.) 15-01-1975 <br> * Abstract * <br> ---- | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 14-09-1981 | LIBBERECHT-VERBEECK |

EPO Form 1503.1 06.78